(19) Europäisches Patentamt

European Patent Office

Office européen des brevets

(11) **EP 4 641 678 A1**

(12) **EUROPEAN PATENT APPLICATION**

(43) Date of publication:
**29.10.2025 Bulletin 2025/44**

(21) Application number: **25169157.2**

(22) Date of filing: **08.04.2025**

(51) International Patent Classification (IPC):
*H01M 4/36* (2006.01)   *H01M 4/505* (2010.01)
*H01M 4/525* (2010.01)   *H01M 4/58* (2010.01)
*H01M 4/136* (2010.01)   *H01M 4/131* (2010.01)
*C01B 25/00* (2006.01)   *C01G 49/00* (2006.01)
*H01M 4/02* (2006.01)   *C01B 25/30* (2006.01)
*H01M 4/62* (2006.01)

(52) Cooperative Patent Classification (CPC):
H01M 4/131; H01M 4/136; H01M 4/364;
H01M 4/366; H01M 4/505; H01M 4/525;
H01M 4/5825; H01M 4/622; C01B 25/30;
C01G 49/009; H01M 2004/021

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.04.2024 KR 20240054509**

(71) Applicant: **SAMSUNG SDI CO., LTD.**
**Yongin-si, Gyeonggi-do 17084 (KR)**

(72) Inventors:
• **KIM, Young-Ki**
  **17084 Yongin-si (KR)**

• **LEE, Soonrewl**
  **17084 Yongin-si (KR)**
• **CHOI, Aram**
  **17084 Yongin-si (KR)**
• **KIM, Sangmi**
  **17084 Yongin-si (KR)**
• **DOO, Sungwook**
  **17084 Yongin-si (KR)**
• **KANG, Gwiwoon**
  **17084 Yongin-si (KR)**

(74) Representative: **Marks & Clerk LLP**
**15 Fetter Lane**
**London EC4A 1BW (GB)**

(54) **POSITIVE ELECTRODE ACTIVE MATERIAL FOR RECHARGEABLE LITHIUM BATTERY, POSITIVE ELECTRODE INCLUDING THE POSITIVE ELECTRODE ACTIVE MATERIAL, AND RECHARGEABLE LITHIUM BATTERY INCLUDING THE POSITIVE ELECTRODE ACTIVE MATERIAL**

(57) A positive electrode active material comprises first particles of a compound having an olivine structure, second particles of a compound having a spinel structure, and third particles of a compound having a layered structure. The first particles and the second particles constitute a main active material, which is present in about 80 parts by weight to about 90 parts by weight based on 100 parts by weight of the positive electrode active material. Also disclosed are positive electrodes including the positive electrode active materials, and rechargeable lithium batteries including the positive electrodes.

FIG. 6

EP 4 641 678 A1

**Description**

BACKGROUND

The present invention relates to a positive electrode active material for a rechargeable lithium battery, a positive electrode including the positive electrode active material, and a rechargeable lithium battery including the positive electrode active material. More particularly, the present invention relates to a positive electrode active material including an olivine-based lithium compound, a positive electrode including the positive electrode active material, and a rechargeable lithium battery including the positive electrode active material.

With the rapid spread of devices that use batteries, such as mobile phones, laptop computers, and electric vehicles, the demand for rechargeable batteries with high energy density and high capacity is rapidly increasing. Accordingly, research and development has been conducted to improve the performance of rechargeable lithium batteries.

A rechargeable lithium battery is a battery including a positive electrode and a negative electrode containing active materials capable of intercalation and deintercalation of lithium ions, and an electrolyte. A rechargeable lithium battery produces electrical energy through the oxidation and reduction reactions when lithium ions are intercalated into and deintercalated from the positive electrode and negative electrode.

SUMMARY

The present invention provides a positive electrode active material that is economical and has high energy density and a high operating voltage.

The present invention also provides a rechargeable lithium battery that is economical and has high energy density and high efficiency.

According to a first aspect of the present invention there is provided a positive electrode active material comprising first particles comprising a compound of Chemical Formula 1 and having an olivine structure, second particles comprising a compound of Chemical Formula 2 and having a spinel structure, and third particles comprising a compound of Chemical Formula 3 and having a layered structure. The first particles and the second particles constitute a main active material, the amount of the main active material being about 80 parts by weight to about 90 parts by weight based on 100 parts by weight of the positive electrode active material, and the amount of the third particles being about 10 parts by weight to about 20 parts by weight based on 100 parts by weight of the positive electrode active material.

$$\text{Chemical Formula 1:} \qquad Li_{a1}Fe_{x1}B_{y1}PO_{4-b1}$$

In Chemical Formula 1, $0.8 \leq a1 \leq 1.2$, $0.1 \leq x1 \leq 1.0$, or $0.1 \leq x1 < 1.0$, $0.001 \leq y1 \leq 0.05$, $0 \leq b1 \leq 0.05$, $x1 + y1 = 1$, and B is at least one of Ti, Mg, V and Nb.

$$\text{Chemical Formula 2:} \qquad Li_{a2}Mn_{x2}Mg_{y2}O_{4-b2}$$

In Chemical Formula 2, $0.8 \leq a2 \leq 1.2$, $1.9 \leq x2 \leq 2.05$, $0 \leq y2 \leq 0.05$ (e.g., $0.001 \leq y2 \leq 0.05$), and $0 \leq b2 \leq 0.05$.

$$\text{Chemical Formula 3:} \qquad Li_{a3}Ni_{x3}Co_{y3}E_{z3}O_{2-b3}$$

In Chemical Formula 3, $0.8 \leq a2 \leq 1.2$, $0.9 \leq x3 \leq 1.0$, $0 \leq y3 \leq 0.1$, $0 \leq z3 \leq 0.1$, $0 \leq b3 \leq 0.05$, $x3 + y3 + z3 = 1$, and E may be Al, Mn, or a combination of Al and Mn.

According to a second aspect of the present invention there is provided a positive electrode for a rechargeable lithium battery comprising a positive electrode current collector, and a positive electrode active material layer on the positive electrode current collector. The positive electrode active material layer comprises the aforementioned positive electrode active material, a conductive material, and a binder.

According to a third aspect of the present invention there is provided a rechargeable lithium battery comprising the aforementioned positive electrode, a negative electrode comprising a negative electrode current collector and a negative electrode active material layer on the negative electrode current collector, and a separator between the positive electrode and the negative electrode.

At least some of the above and other features of the invention are set out in the claims.

BRIEF DESCRIPTION OF THE FIGURES

The accompanying drawings are included to provide a further understanding of the present disclosure and are incorporated in and constitute a part of this specification. The drawings illustrate embodiments of the present disclosure and, together with the description, serve to explain principles of the present disclosure.

FIG. 1 is a simplified conceptual diagram showing a rechargeable lithium battery according to some embodiments of the present disclosure.

FIGS. 2 to 5 are cross-sectional views schematically showing rechargeable lithium batteries according to some embodiments.

FIGS. 6 and 7 are enlarged views showing positive electrode active material layers of a rechargeable lithium battery according to some embodiments of the present disclosure.

FIGS. 8A and 8B are scanning electron microscope (SEM) images showing a positive electrode active material of Preparation Example 1 of the present disclosure.

FIGS. 8C and 8D are SEM images showing a positive electrode active material of Preparation Example 2 of the present disclosure.

FIGS. 9A and 9B are SEM images showing a positive electrode active material of Preparation Example 3 of the present disclosure.

FIGS. 10A and 10B are SEM images showing a positive electrode active material of Preparation Example 4 of the present disclosure.

DETAILED DESCRIPTION

In order to fully understand the configuration and effect of the present disclosure, embodiments of the present disclosure will be described in more detail with reference to the accompanying drawings. The present disclosure may, however, be embodied in one or more suitable forms and should not be construed as limited to one or more embodiments set forth herein, and one or more suitable changes and modifications can be made. The embodiments are provided so that this disclosure will be thorough and complete and will fully convey the scope of the present disclosure to those skilled in the art to which the present disclosure pertains.

In this specification, it will be understood that, when an element is referred to as being on another element, the element may be directly on the other element or intervening elements may be present therebetween. In contrast, if an element is referred to as being directly on another element, no intervening elements are present therebetween.

In the drawings, thicknesses of components are exaggerated for clarity and to assist in explaining the technical contents. Like reference numerals and/or symbols refer to like elements throughout the specification, and duplicative descriptions thereof may not be provided.

Singular forms are intended to include the plural forms as well, unless the context clearly indicates otherwise. In addition, unless otherwise specially noted, the phrases "A or B" and "A and/or B" may indicate "A but not B", "B but not A", or "A and B". The terms "comprises/includes" and/or "comprising/including" used in this specification do not exclude the presence or addition of one or more other components.

In this specification, "combination thereof" may refer to a mixture, a stack, a composite, a copolymer, an alloy, a blend, and/or a reaction product of components.

Unless otherwise defined in this specification, a particle diameter may be an average particle diameter. Also, the particle diameter refers to an average particle diameter ($D_{50}$) which refers to a diameter of particles at a cumulative volume of about 50 vol% in a particle size distribution. The average particle diameter ($D_{50}$) may be measured by any suitable method, for example, may be measured by a particle size analyzer, or may be measured using a transmission electron microscope (TEM) image and/or a scanning electron microscope (SEM) image. In one or more embodiments, the average particle diameter is measured by a measuring device using dynamic light-scattering, wherein the number of particles is counted for each particle size range by performing data analysis, and an average particle diameter ($D_{50}$) value may then be obtained by calculation therefrom. Also, the average particle diameter may be measured using a laser diffraction method. When measured by the laser diffraction method, after dispersing particles to be measured in a dispersion medium, the dispersion medium is introduced into a commercial laser diffraction particle size measurement instrument (e.g., Micro-Trak MT-3000™) and irradiated with ultrasonic waves of about 28 kHz at an output of about 60 W, and the average particle diameter ($D_{50}$) based on about 50% of particle size distribution in the measurement instrument may then be calculated. In the present specification, when particles are spherical, "diameter" or "size" indicates a particle diameter, and when the particles are non-spherical, the "diameter" or "size" indicates a major axis length.

It will be understood that, although the terms first, second, etc. may be used herein to describe various elements, the elements are not limited by these terms. These terms are only used to distinguish one element from another element. Thus, a first element could be termed a second element without departing from the teachings of the present invention. Similarly, a second element could be termed a first element.

As used herein, the terms "use," "using," and "used" may be considered synonymous with the terms "utilize," "utilizing," and "utilized," respectively.

As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Further, the use of "may" when describing embodiments of the present disclosure refers to "one or more embodiments of the present disclosure".

Spatially relative terms, such as "beneath," "below," "lower," "above," "upper," "bottom," "top" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

As used herein, the terms "substantially", "about", and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within $\pm$ 30%, 20%, 10%, 5% of the stated value.

Numerical ranges recited herein include all sub-ranges of the same numerical precision subsumed within the recited range. For example, a range of "1.0 to 10.0" include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein includes all lower numerical limitations subsumed therein and any minimum numerical limitation recited in this specification includes all higher numerical limitations subsumed therein.

A person of ordinary skill in the art will appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

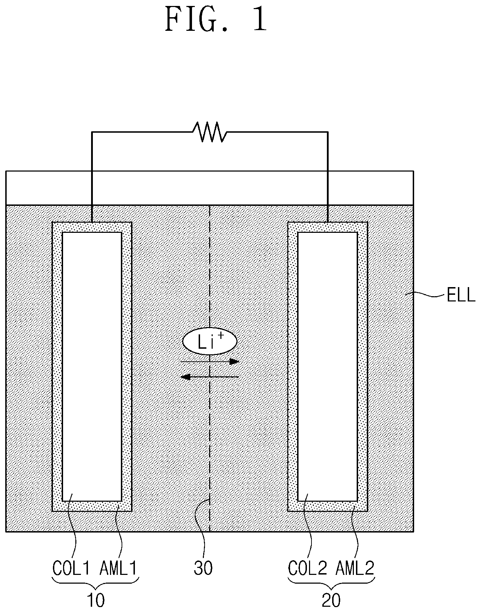

FIG. 1 is a simplified conceptual diagram showing a rechargeable lithium battery according to one or more embodiments of disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced and/or apart (e.g., spaced apart or separated) from each other with the separator 30 therebetween. The separator 30 may be arranged between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated with the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

Positive Electrode 10

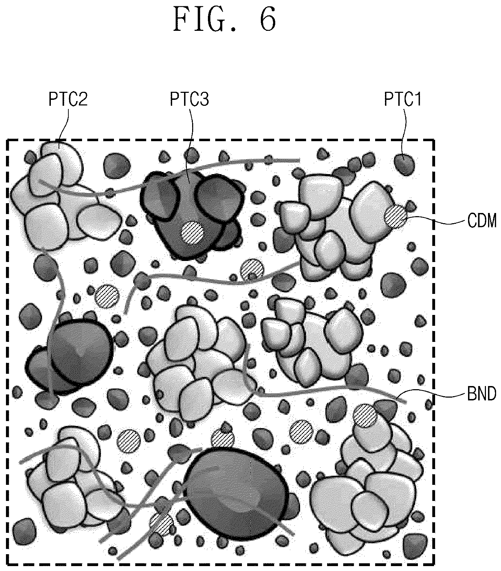

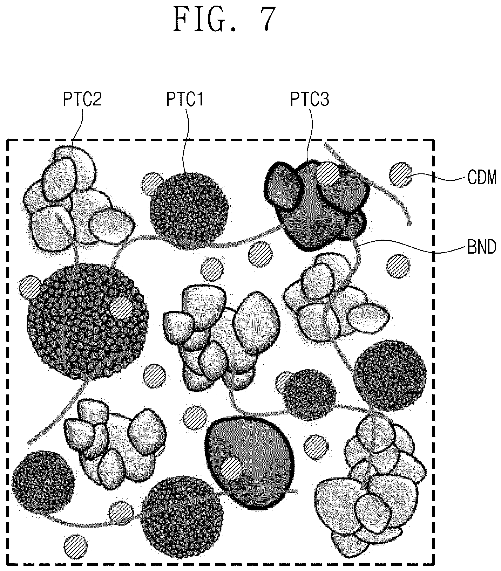

The positive electrode 10 for a rechargeable lithium battery includes a current collector COL1 and a positive electrode active material layer AML1 formed on the current collector COL1. The positive electrode active material layer AML1 includes a positive electrode active material, a binder and/or a conductive material. The positive electrode active material layer AML1 according to one or more embodiments of the present disclosure will be described in more detail with reference to FIGS. 6 and 7. Aluminium (Al) may be used as the current collector COL1, but the present disclosure is not limited thereto.

**Negative Electrode 20**

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g. an electrically conductive material).

The negative electrode active material layer AML2 may include, for example, about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles to each other and also to attach the negative electrode active material to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resins, polyvinyl alcohol, and/or a (e.g., any suitable) combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, and/or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive material may be used to impart conductivity (e.g. electrical conductivity) to the electrode. Any material that does not cause chemical change (e.g. does not cause an undesirable chemical change in the rechargeable lithium battery) and that conducts electrons can be used in the battery. Non-limiting examples of the conductive material include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, and/or the like in a form of a metal powder and/or a metal fiber; a conductive polymer such as a polyphenylene derivative; and/or a (e.g., any suitable) mixture thereof.

The negative current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

**Negative Electrode Active Material**

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, such as, for example, crystalline carbon, amorphous carbon, and/or a (e.g., any suitable) combination thereof. The crystalline carbon may be graphite such as non-shaped (e.g., randomly shaped), sheet-shaped, flake-shaped, sphere-shaped, and/or fiber-shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof). The Sn-based negative electrode active material may include Sn, $SnO_y$ ($0 < y \leq 2$), e.g., $SnO_2$, a Sn-based alloy, and/or a (e.g., any suitable) combination thereof.

The silicon-carbon composite may be a composite of silicon and amorphous carbon. According to one or more embodiments, the silicon-carbon composite may be in a form of silicon particles and amorphous carbon coated on the surface of the silicon particles. For example, the silicon-carbon composite may include a secondary particles (cores) in which primary silicon particles are assembled (agglomerated), and an amorphous carbon coating layer (shell) on the surfaces of the secondary particles. The amorphous carbon may also be between the primary silicon particles, for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material and/or the Sn-based negative electrode active material may be used in combination with a carbon-based negative electrode active material.

**Separator 30**

Depending on the type (kind) of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film may be a polyethylene/polypropylene two-layer separator, polyethylene/polypropylene/polyethylene three-layer separator, polypropylene/polyethylene/polypropylene three-layer separator, and/or the like.

The separator 30 may include a porous substrate and a coating layer including an organic material, an inorganic material, and/or a (e.g., any suitable) combination thereof on a surface (e.g., one or both (e.g., simultaneously) surfaces (e.g., opposite surfaces)) of the porous substrate.

The porous substrate may be a polymer film formed of any one selected from among polymer polyolefin such as polyethylene and/or polypropylene, polyester such as polyethyleneterephthalate and/or polybutyleneterephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (TEFLON®), and/or may be a copolymer and/or mixture of two or more thereof.

The organic material may include a polyvinylidene fluoride-based polymer and/or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and/or a (e.g., any suitable) combination thereof. But the present disclosure is not limited to these examples.

The organic material and the inorganic material may be mixed in one coating layer, or a coating layer including an organic material and a coating layer including an inorganic material may be stacked.

**Electrolyte Solution ELL**

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based solvent, an ester-based solvent, an ether-based solvent, a ketone-based solvent, and/or an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), fluoroethylene carbonate (FEC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether bond), and/or the like; amides such as dimethylformamide; dioxolanes such as 1,3-dioxolane, 1,4-dioxolane, and/or the like; sulfolanes, and/or the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1: 1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato) borate (LiBOB).

**Rechargeable Lithium Battery**

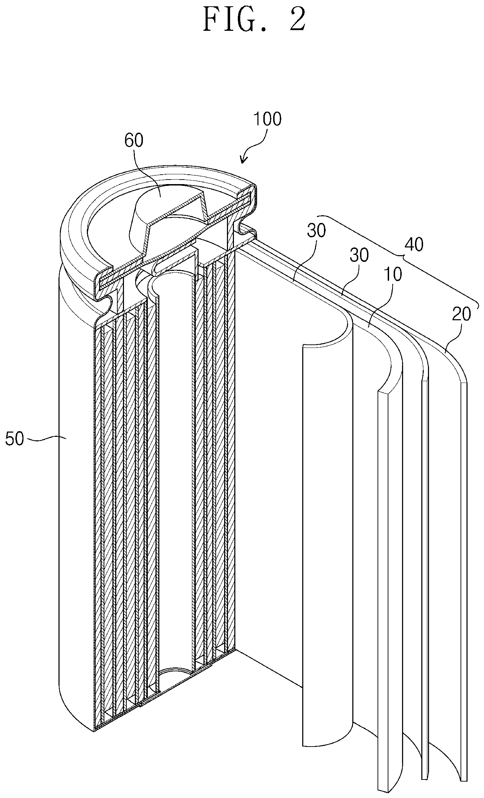

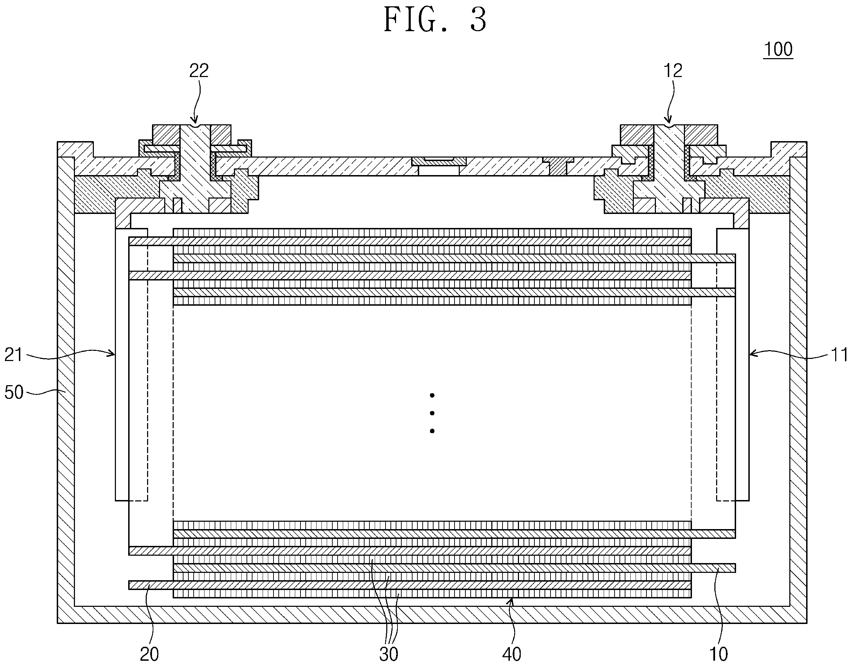

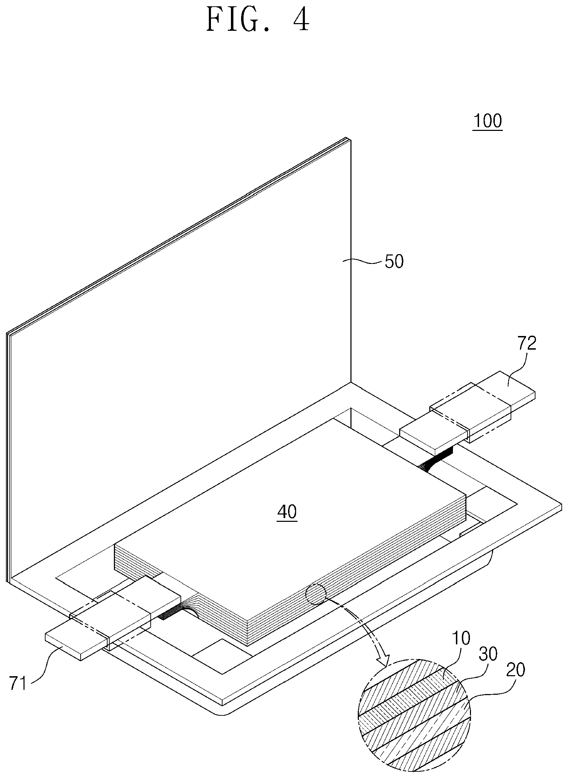

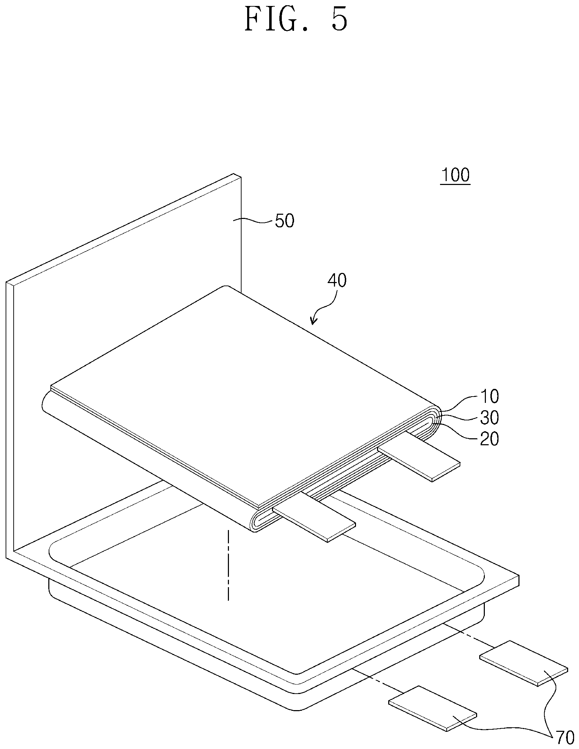

The rechargeable lithium battery may be classified into cylindrical, prismatic, pouch, or coin-type (kind) batteries, and/or the like depending on its shape. FIGS. 2 to 5 are schematic views illustrating rechargeable lithium batteries according to embodiments. FIG. 2 shows a cylindrical battery, FIG. 3 shows a prismatic battery, and FIGS. 4 and 5 show pouch-type (kind) batteries. Referring to FIGS. 2 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2. As shown in FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to outside of the battery.

The rechargeable lithium battery according to one or more embodiments may be applied to automobiles, mobile phones, and/or one or more suitable types (kinds) of electric devices, as non-limiting examples.

FIGS. 6 and 7 are enlarged views of positive electrode active material layers of a rechargeable lithium battery according to some embodiments of the present disclosure. Referring to FIGS. 6 and 7 a positive electrode active material layer AML1 (see FIG. 1) includes a first particle PTC1, a second particle PTC2, a third particle PTC3, a conductive material CDM, and a binder BND. A plurality of the first particles PTC1, a plurality of the second particles PTC2 and a plurality of the third particles PTC3 constitute a positive electrode active material according to the present invention.

The positive electrode active material layer AML1 may further include an additive that serves as a sacrificial positive electrode.

The amount of the positive electrode active material (PTC1, PTC2 and PTC3) in the positive electrode active material layer AML1 may range from about 90 wt% to about 99 wt% relative to 100 wt% of the positive electrode active material layer AML1. Each of the amounts of the binder BND and the conductive material CDM may be about 0.5 wt% to about 5 wt% relative to 100 wt% of the positive electrode active material layer AML1.

The binder BND may combine the first particles PTC1, the second particles PTC2, the third particles PTC3 and the conductive material CDM with each other. For example, the binder BND may include at least one of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon, but the present disclosure is not limited to these examples.

The conductive material CDM may be used to improve conductivity of the positive electrode active material layer AML1. Any conductive material that does not cause a chemical change of the positive electrode active material layer AML1 may be used. For example, the conductive material CDM may include: a carbon-based material such as natural graphite, artificial graphite, carbon black, acetylene black, Ketjen black, carbon fiber, carbon nano-fiber, and carbon nano-tube; a metal-based material containing copper, nickel, aluminium, silver or the like and having a metal powder or metal fiber form; a conductive polymer such as a polyphenylene derivative; or a mixture thereof.

Hereinafter, each of the first particles PTC1, the second particles PTC2 and the third particles PTC3 will be explained in more detail.

**First Particles**

The first particles PTC1 include a lithium compound with an olivine structure, represented by Chemical Formula 1:

$$Li_{a1}Fe_{x1}B_{y1}PO_{4-b1}$$

In Chemical Formula 1, $0.8 \leq a1 \leq 1.2$, $0.1 \leq x1 \leq 1.0$, or $0.1 \leq x1 < 1.0$, $0.001 \leq y1 \leq 0.05$, $0 \leq b1 \leq 0.05$, and $x1 + y1 = 1$ is satisfied. B is at least one of Ti, Mg, V, and Nb and is a dopant doped in the first particle PTC1. The dopant B may control the size of primary particles to be uniform and thus may improve the charge and discharge efficiency, low-temperature properties and lifetime characteristics of a rechargeable lithium battery.

In an embodiment, the first particles PTC1 may include coating layers on the surfaces thereof. The coating layers may cover the entire surface of the first particles PTC1 or may cover portions of the surfaces of the first particle PTC1. The coating layers may include, for example, carbon and/or a carbon-containing compound. The first particles PTC1 may have improved structural stability and electrical conductivity due to the coating layers.

The coating layer may further include at least one of a titanium-containing compound, a magnesium-containing compound, a vanadium-containing compound, and a niobium-containing compound. The metal-containing compound such as the titanium-containing compound, the magnesium-containing compound, the vanadium-containing compound, and the niobium-containing compound, may be, for example, a metal oxide, a metal hydroxide, a metal carbonate, a synthesized compound thereof or a mixture thereof. The metal-containing compound may further include other metal or non-metal elements. For example, the metal-containing compound may further include lithium.

The first particle PTC1 may further include carbon derived from the coating layers. The amount of carbon in each of the first particles PTC1 may be about 0.5 wt% to about 10 wt%, about 1 wt% to about 3 wt%, or about 1.5 wt% to about 2.5 wt%. The amount of carbon according to embodiments of the present invention may be performed using an Elementar Micro Cube elemental analyzer. An example method of operation and conditions are as follows. A sample of about 1 to 2 mg is weighed in a tin cup, placed in an automatic sampling tray and introduced into a combustion tube through a ball valve, and the combustion is carried out at a combustion temperature of about 1000 °C. Subsequently, reduction of the combustion gas using reduced copper is carried out to form carbon dioxide. Carbon dioxide is detected using a thermal conductivity detector (TCD). After detecting carbon dioxide ($CO_2$) using a TCD, the carbon content can be determined by converting the detected $CO_2$ amount into its corresponding carbon concentration. This conversion can be performed using a calibration curve established with standard reference materials of known carbon concentrations, ensuring an accurate correlation between detector response and carbon content. The carbon content may then be calculated using the following formula:

$$\text{Carbon Content}(\%) = \frac{\text{Mass of detected CO}_2 \times \text{Atomic weight of C}}{\text{Molecular weight of CO}_2 \times \text{Sample mass}} \times 100$$

The final carbon content can be expressed as a percentage of the total sample mass. If necessary, blank sample measurements can be used to correct for background signals, thereby improving accuracy.

Referring to FIG. 6 again, the first particles PTC1 may have a single particle form. In the description, a single particle may mean a sole particle that does not have a grain boundary inside of the particle. The single particle has a morphology phase, and may mean a monolithic structure, or a non-agglomerated particle in which the particles exist as an independent phase that are not agglomerated. For example, the single particle may be a single crystal. In addition, the single particle may be a particle containing several crystals. The single particle may be a solely separated form.

The first particles PTC1 may be a positive electrode active material of a nano-type, i.e. of nanometer size, or a micro-type, i.e. of a micrometer size. The first particles PTC1 may include at least one first primary particle. As used herein, primary particles may be single particles, as in embodiments where the first or second particles are provided in a single particle form. Primary particles also may be particles that are combined to make a secondary particle form, for example, primary particles are agglomerated to form secondary particles. In embodiments, the first particles PTC1 may have spherical or elliptical shapes, in which first primary particles are agglomerated. In another embodiment, though the first primary particles agglomerate, the first particles PTC1 may not have spherical shapes but instead may have random shapes.

The first particles PTC1 may be provided in various sizes. For example, the average particle diameter of the first particles PTC1 may be about 500 nm to about 2.5 $\mu$m, or about 1 $\mu$m. The minimum particle diameter of the first particles PTC1, that is, the size of the first primary particles, may be about 100 nm to about 500 nm, or about 200 nm to about 300 nm.

In an embodiment, the average particle diameter may be measured by a particle size analyzer. The average particle diameter may mean the diameter of particles at an accumulated volume of about 50 vol% ($D_{50}$) in particle size distribution.

In an embodiment, the minimum particle diameter, that is, the size of the first primary particles may mean a diameter measured by randomly selecting about 30 primary particles on an electron microscope image of the first particles PTC1.

Referring to FIG. 7 again, in embodiments the first particles PTC1 has a polycrystal form, and may include a secondary particle in which at least 2 or more first primary particles are agglomerated. In other words, one first particle PTC1 may include a plurality of first primary particles that are agglomerated with each other and thereby constitute a secondary particle. The first particle PTC1 may have spherical or elliptical shapes.

In embodiments, the first particles PTC1 may further include a grain boundary coating layers on the surface of each of the first primary particles. The grain boundary coating layers may be present in the first particle PTC1. The grain boundary coating layers may be formed along the interface between the first primary particles inside the first particle PTC1. In other words, the grain boundary coating layer may mean a material coated on the grain boundaries in the first particles PTC1. The grain boundary coating layers may include carbon and/or a carbon-containing compound. The grain boundary coating layer may further include at least one of a titanium-containing compound, a magnesium-containing compound, a vanadium-containing compound, and a niobium-containing compound.

The interior of the first particles PTC1 may mean the entire interior of the first particles PTC1 excluding the surfaces of the first particles PTC1. For example, the interiors of the first particles PTC1 may mean entire interiors from a depth of about 10 nm from the surface of the first particle PTC1, or regions from a depth of about 10 nm to a depth of about 2 $\mu$m.

Since the first particles PTC1 may further include the grain boundary coating part, structural stability may be reinforced, and uniform coating layers may be formed on the surfaces of the first particle PTC1. In addition, since the first particles PTC1 may further include the grain boundary coating parts, the electrical conductivity of the first particles PTC1 may be further improved.

The first particles PTC1 may further include carbon derived from the coating layers and/or grain boundary coating layers. The amount of carbon in the first particles PTC1 may be about 0.5 wt% to about 10 wt%, about 1 wt% to about 3 wt%, or about 1.5 wt% to about 2.5 wt%.

If the first particles PTC1 are secondary particles, the average particle diameter of the first particles PTC1 may be about 2 $\mu$m to about 15 $\mu$m, about 3 $\mu$m to about 10 $\mu$m, or about 3 $\mu$m to about 7 $\mu$m. For example, the average particle diameter of the first particles PTC1 may be about 5 $\mu$m. In an embodiment, the average particle diameter may be measured using a particle size analyzer. The average particle diameter may mean the diameter ($D_{50}$) of particles at an accumulated volume of about 50 vol% in particle size distribution.

The average size (diameter) of the first primary particles may be about 200 nm or less. For example, the average size of the first primary particles may be about 10 nm to a bout 200 nm, about 20 nm to about 200 nm, about 50 nm to about 200 nm, or about 100 nm to about 200 nm. In an embodiment, the average particle size of the first primary particles may mean a diameter measured by randomly selecting about 30 primary particles on an electron microscope image on the positive electrode active material. The size of the first primary particles may be uniform.

If the first particles PTC1 have a polycrystal form, the size of the first primary particle may be smaller compared to a case where the first particle PTC1 is a single particle form. For example, the size of the first primary particles in a case where the first particles PTC1 are polycrystal form may be about 100 nm smaller than the size of the first primary particle in the case where the first particle PTC1 are a single crystal form.

If the average particle diameter of the first particles PTC1 and the average size of the first primary particles satisfy the above-described ranges, and if the size of the first primary particles is uniform, the charge and discharge capacity and capacity at low temperature of a rechargeable lithium battery including the particles may be improved.

The first particles PTC1 may have spherical shapes in which first primary particles with a nano-size are agglomerated. Since the first primary particles may be closely agglomerated in the first particle PTC1, the particles may have the following properties. The first particles PTC1 may have a spherical or elliptical shapes. The average particle diameter ($D_{50}$) of the first particles PTC1 may be about 2 $\mu$m to about 15 $\mu$m. The porosity of the first particles PTC1 may be about 20% to about 40%. Porosity may be defined as the pore volume divided by the total volume of a particle. The span value of the first particles PTC1 analyzed by a particle size analyzer may be about 0.3 to about 0.75.

### Second Particles

The second particles PTC2 include a lithium compound with a spinel structure, represented by Chemical Formula 2:

$$Li_{a2}Mn_{x2}Mg_{y2}O_{4-b2}$$

In Chemical Formula 2, $0.8 \leq a2 \leq 1.2$, $1.9 \leq x2 \leq 2.05$, $0 \leq y2 \leq 0.05$ (e.g., $0.001 \leq y2 \leq 0.05$), and $0 \leq b2 \leq 0.05$ are satisfied. Mg is a dopant doped in the second particles PTC2. Mg may control the size of primary particles to be uniform and thereby stabilize the crystal structure of the positive electrode active material and improve the charge and discharge efficiency, low-temperature properties, and lifetime characteristics of a rechargeable lithium battery. The second particles PTC2 may further include Al as a dopant in addition to Mg.

Referring to FIGS. 6 and 7 again, the second particles PTC2 may have a polycrystal form and may include secondary particles in which at least 2 or more second primary particles are agglomerated. In other words, one second particle PTC2 may include a plurality of second primary particles that are agglomerated with each other. The second particles PTC2 may have agglomerated spherical shapes of the second primary particles, and though the second primary particles agglomerate, the second particles PTC2 may have random shapes.

The average particle diameter of the second particles PTC2 may be about 3 $\mu$m to about 20 $\mu$m, about 4 $\mu$m to about 15 $\mu$m, or about 5 $\mu$m to about 10 $\mu$m. For example, the minimum particle diameter of the second particles PTC2 may be about 8 $\mu$m. In embodiments, the average particle diameter may be measured by a particle size analyzer. The average particle diameter may mean the diameter of particles at an accumulated volume of about 50 vol% ($D_{50}$) in particle size

distribution.

The average size (diameter) of the second primary particles constituting the second particles PTC2 may be about 3 $\mu$m or less. For example, the average particle diameter of the second primary particles may be about 300 nm to about 3 $\mu$m, about 500 nm to about 3 $\mu$m, about 1 $\mu$m to about 3 $\mu$m, or about 2 $\mu$m to about 3 $\mu$m. In an embodiment, the average particle size of the second primary particles may mean a diameter measured by randomly selecting about 30 primary particles on an electron microscope image on the positive electrode active material. The size of the second primary particles may be uniform. The second primary particles may have a smaller average size than the first primary particles. The difference of the average sizes between the second primary particles and the first primary particles may be about 300 nm or more.

The second particles PTC2 may include second coating layers on the surfaces of the particles. By including the second coating layers, the second particles PTC2 may effectively suppress structural collapse due to repeated charging and discharging.

The second coating layers may include a magnesium-containing compound, an aluminium-containing compound or a combination of a magnesium-containing compound and an aluminium-containing compound. A metal-containing compound in each of the second coating layers may be, for example, a metal oxide, a metal hydroxide, a metal carbonate, a synthesized compound thereof or a mixture thereof. The metal-containing compound may further include other metal or nonmetal elements. For example, the second coating layers may further include lithium, manganese, and/or nickel.

**Third Particles**

The third particles PTC3 include a lithium compound with a layered structure, represented by Chemical Formula 3:

$$Li_{a3}Ni_{x3}Co_{y3}E_{z3}O_{2-b3}$$

In Chemical Formula 3, $0.8 \leq a2 \leq 1.2$, $0.9 \leq x3 \leq 1.0$, $0 \leq y3 \leq 0.1$, $0 \leq z3 \leq 0.1$, $0 \leq b3 \leq 0.05$, $x3 + y3 + z3 = 1$, and E is Al, Mn or a combination of Al and Mn.

The third particles PTC3 may have a single particle form similar to the first particles PTC1. And the description of the single particles may be the same as or similar to the above description of the first particles PTC1. The third particles PTC3 may have a form composed of one single type of particle. In another embodiment, the third particle PTC3 may have a form in which a plurality of single particles agglomerate with each other, i.e., in the form of secondary particles. The positive electrode active material according to the present disclosure may include the third particle PTC3 in a single particle form, and the high capacity and high energy density of a rechargeable battery including the positive electrode active material may be accomplished.

In embodiments, the third particles PTC3 may include a third coating layer on surfaces thereof. By including the third coating layers, structural collapse due to repeated charging and discharging may be effectively suppressed. Accordingly, the lifetime characteristics of a rechargeable battery may be improved.

The third coating layers may include an aluminium-containing compound, a manganese-containing compound, or a combination of a manganese-containing compound and an aluminium-containing compound. The metal-containing compound in the third coating layers may be, for example, a metal oxide, a metal hydroxide, a metal carbonate, a synthesized compound thereof, or a mixture thereof. The metal-containing compound may further include other metal or nonmetal elements. For example, the third coating layers may further include lithium, manganese, and/or nickel.

A method for measuring the metal content in the third coating layers of the third particles PTC3 may include performing scanning electron microscopy-energy dispersive X-ray spectroscopy (SEM-EDS) on the third particles PTC3. Through the analysis, the manganese and/or aluminium contents in the third coating layer may be confirmed. As a method for measuring the metal content in the third coating layers, an inductively coupled plasma-mass spectrometry (ICP-MS), an inductively coupled plasma optical emission spectroscopy (ICP-OES) or the like may be used in addition to the SEM-EDS.

The average particle diameter of the third particles PTC3 may be about 2 $\mu$m to about 15 $\mu$m, about 2 $\mu$m to about 10 $\mu$m, or about 2 $\mu$m to about 5 $\mu$m. The average particle diameter of the third particles PTC3 may be greater than the average particle diameter of the first particles PTC1.

In an embodiment, the average particle diameter of the third particles PTC3 may be obtained by measuring a diameter by randomly selecting about 30 third particles PTC3 in an electron microscope image of a positive electrode active material, and taking the diameter of particles at an accumulated volume of about 50 vol% ($D_{50}$) in particle size distribution as the average particle diameter.

In another embodiment of the present disclosure, the third particles PTC3 may have a secondary particle form in which primary particles are agglomerated. In this case, the third particles PTC3 may have a granular or spherical shape, and the average particle diameter of the third particles PTC3 may be about 10 $\mu$m to about 30 $\mu$m, about 10 $\mu$m to about 20 $\mu$m, or about 10 $\mu$m to about 15 $\mu$m.

In another embodiment of the present disclosure, the third particles PTC3 may be present in a mixture type of a compound in a single particle form and a compound in a secondary particle form.

Referring to FIGS. 6 and 7 again, the positive electrode active material according to embodiments of the present disclosure will be explained in more detail. The first particles PTC1 and second particles PTC2 constitute a main active material, and the amount of the main active material is about 80 parts by weight to about 90 parts by weight based on 100 parts by weight of the positive electrode active material.

A lithium iron phosphate-based positive electrode active material (first particles PTC1) with an olivine crystal structure is relative inexpensive compared to other positive electrode materials and has excellent stability and lifetime characteristics. But the positive electrode active material have low energy density and be difficult to use at a high voltage. A lithium manganese oxide-based positive electrode active material (second particles PTC2) with a spinel structure has a high operating voltage and excellent stability and is inexpensive, but, like the positive electrode active material with the first particles PTC1, may have a low energy density.

Since the first particles PTC1 and the second particles PTC2 are mixed and used as a main active material in the positive electrode active material according to the present disclosure, it is inexpensive and stable, and high operating voltage and excellent lifetime characteristics may be achieved. Relatively low energy density may be improved by including the third particles PTC3 that have excellent capacity and output characteristics. A rechargeable lithium battery including the positive electrode active material according to embodiments of the present disclosure may have energy density of about 450 Wh/kg to about 600 Wh/kg, about 450 Wh/kg to about 550 Wh/kg, or about 470 Wh/kg to about 530 Wh/kg.

The mixing ratio of the first particles PTC1 and the second particles PTC2 may be about 4:6 to about 6:4, or about 4.5:5.5 to about 5.5:4.5 based on weight. In this case, the Mn amount in the main active material composed of the first particles PTC1 and the second particles PTC2 may be about 40 mol% to about 70 mol%, about 50 mol% to about 70 mol%, or about 50 mol% to about 60 mol%. The Mn content is similar to the manganese content of a common lithium manganese iron phosphate (hereinafter, referred to as LMFP) positive electrode active material.

By appropriately mixing and using the first particles PTC1 and the second particles PTC2 so as to have the above manganese amount, a positive electrode active material that exhibits electrochemically similar properties to LMFP but is easier to manufacture and process than LMFP may be obtained. In this disclosure, the Mn amount in the main active material means the number of moles of Mn relative to the number of total moles of all metals in the total main active material including the first particles PTC1 and the second particles PTC2 excluding lithium and extremely small amounts of doped materials (for example, B of Chemical Formula 1 and Mg of Chemical Formula 2).

The amount of the third particles PTC3 is about 10 parts by weight to about 20 parts by weight based on 100 parts by weight of the positive electrode active material. If the amount of the third particles PTC3 satisfy these ranges, the deterioration of the lifetime may be minimized, stability of the positive electrode active material may be maximized, and capacity properties may be improved.

The positive electrode active material of the present disclosure may improve mixture pellet density. In an embodiment, the pellet density of the positive electrode active material of the present disclosure may be about 2 g/cc to about 3 g/cc, or about 2.5 g/cc to about 2.8 g/cc, or about 2.6 g/cc to about 2.8 g/cc.

The rechargeable lithium battery including the positive electrode active material of the present disclosure may have an excellent average voltage. In an embodiment, the average voltage of the rechargeable lithium battery of the present disclosure may be about 3.2 V to about 4.5 V. For example, an operating voltage range may be about 3.5 V to about 3.7 V, or about 3.55 V to about 3.65 V.

The rechargeable lithium battery including the positive electrode active material of the present disclosure may have improved lifetime characteristics. In an embodiment, the rechargeable lithium battery of the present disclosure may have capacity retention of about 95% or more after charging and discharging 50 times with constant current of about 1.0C at the voltage. For example, the capacity retention may be about 97% to about 100%, or about 98% to about 100%.

Hereinafter, the Examples of the present disclosure and Comparative Examples will be described. However, the Examples are only illustrations of the present disclosure, and the present disclosure is not limited to the Examples.

**Preparation Example 1: Preparation of First Particles with Single Particle Form**

A $Fe_1PO_4$ iron phosphate precursor, lithium carbonate, and titanium dioxide were mixed in a molar ratio of about 1:1.03:0.004. To the mixture, 10 wt% of glucose was added. A wet grinding process was performed by a ball milling of the mixture. The mixture was evaporated and dried in a heating furnace tray and put in a vacuum oven for drying at about 120 °C for about 4 hours. The dried mixture was baked under a nitrogen atmosphere at about 750 °C for about 10 hours. The baked product was ground to obtain first particles in a single particle form. The average size of the first particles was about 200 nm to about 300 nm.

**Preparation Example 2: Preparation of First Particles in Secondary Particle Form**

A $Fe_1PO_4$ iron phosphate precursor, lithium carbonate and titanium dioxide were mixed in a molar ratio of about 1:1.03:0.004. To the mixture, 10 wt% of glucose was added. A mixture that was a slurry was evaporated and dried by spray drying with a spray pressure of about 0.5 MPa at temperature conditions of about 230 °C. The dried mixture was baked under a nitrogen atmosphere at about 750 °C for about 10 hours to obtain first particles in a secondary particle form. The average size of the primary particles of the first particles in a secondary particle form was about 100 nm to about 200 nm.

**Preparation Example 3: Preparation of Second Particles in Secondary Particle Form**

In 100 ml of distilled water, 0.170 g of $MnSO_4H_2O$ and 0.228 g of $(NH_4)_2S_2O_8$ were dissolved, and sulfuric acid was added thereto to adjust pH to 1, followed by reacting at about 130 °C for about 10 hours to obtain a solid precipitate. The precipitate thus obtained was washed with distilled water several times and dried at about 300 °C for about 3 hours to obtain $MnO_2$ as a solid having an average particle diameter of about 5 $\mu$m.

$Li_2CO_3$ and $MnO_2$ were thereby synthesized and were mixed so that the molar ratio of Li and Mn became about 1:2, and heated at about 600 °C for about 10 hours to synthesize $LiMn_2O_4$ particles having an average particle diameter of about 8 $\mu$m.

**Preparation Example 4: Preparation of Third Particles in Single Particle Form**

A high nickel-based precursor was prepared using a co-precipitation method. Particularly, nickel sulfate ($NiSO_4 \cdot 6H_2O$), cobalt sulfate ($CoSO_4 \cdot 7H_2O$) and manganese sulfate ($Mn(SO_4)_3 \cdot H_2O$) in a molar ratio of about 93:5:2 as the raw materials of a nickel-based metal hydroxide were dissolved in distilled water as a solvent to prepare a metal raw material mixture. The metal raw material mixture, ammonia water, and sodium hydroxide were put in a reactor and reacted. A slurry solution in the reactor was filtered and washed with distilled water with high purity. The washed material was dried in a hot air oven at about 210 °C for about 24 hours to obtain a small size precursor ($Ni_{0.93}Co_{0.05}Mn_{0.02}(OH)_2$) powder with an average particle diameter of about 4 $\mu$m.

A high nickel-based precursor and anhydrous lithium hydroxide (LiOH) were dry mixed using a Henschel mixer. The mixing was performed so that the molar ratio of lithium and a transition metal was about 1:1. As used herein, the transition metal means the total sum of transition metals (Ni+Co+Mn) contained in the high nickel-based precursor. A melting agent was added to the mixture and the mixture was heat treatment (i.e., baking process) under an oxygen atmosphere at about 750 °C for about 15 hours to synthesize second particles as the high nickel-based positive electrode active material. The second particles were ground using a Jet mill with a pressure of about 3 bars.

The second particles were added to distilled water and washed. Magnesium oxide and aluminium oxide corresponding to about 3 mol% based on the total sum of the transition metals of the second particles were added to create a magnesium and aluminium coating. The second particles were dried at about 150 °C for about 12 hours and heated (i.e., surface treated) under an oxygen atmosphere at about 700 °C for about 15 hours.

**Preparation Example 5: Preparation of Main Active Material**

A main active material was prepared by mixing the first particles of Preparation Example 2 and the second particles of Preparation Example 3 in a weight ratio of about 46:54. In this case, the Mn amount in the main active material was about 67 mol%.

**Preparation Example 6**

A main active material was prepared by mixing the first particles of Preparation Example 2 and the second particles of Preparation Example 3 in a weight ratio of about 55:45. In this case, the Mn amount in the main active material was about 59 mol%.

**Example 1: Preparation of Final Positive Electrode Active Material**

A positive electrode active material was prepared by mixing the main active material of Preparation Example 5 and the third particles of Preparation Example 4 in a weight ratio of about 90:10.

**Example 2**

A positive electrode active material was prepared by mixing the main active material of Preparation Example 5 and the third particles of Preparation Example 4 in a weight ratio of about 85:15.

**Example 3**

A positive electrode active material was prepared by mixing the main active material of Preparation Example 5 and the third particles of Preparation Example 4 in a weight ratio of about 80:20.

**Example 4**

A positive electrode active material was prepared by mixing the main active material of Preparation Example 6 and the third particles of Preparation Example 4 in a weight ratio of about 90:10.

**Example 5**

A positive electrode active material was prepared by mixing the main active material of Preparation Example 6 and the third particles of Preparation Example 4 in a weight ratio of about 85:15.

**Example 6**

A positive electrode active material was prepared by mixing the main active material of Preparation Example 6 and the third particles of Preparation Example 4 in a weight ratio of about 80:20.

**Comparative Example 1**

A positive electrode active material was prepared by mixing the main active material of Preparation Example 5 and the third particles of Preparation Example 4 in a weight ratio of about 95:5.

**Comparative Example 2**

A positive electrode active material was prepared by mixing the main active material of Preparation Example 5 and the third particles of Preparation Example 4 in a weight ratio of about 75:25.

**Comparative Example 3**

A positive electrode active material was prepared by mixing the main active material of Preparation Example 5 and the third particles of Preparation Example 4 in a weight ratio of about 70:30.

**Comparative Example 4**

A positive electrode active material was prepared by mixing the main active material of Preparation Example 6 and the third particles of Preparation Example 4 in a weight ratio of about 95:5.

**Comparative Example 5**

A positive electrode active material was prepared by mixing the main active material of Preparation Example 6 and the third particles of Preparation Example 4 in a weight ratio of about 75:25.

**Comparative Example 6**

A positive electrode active material was prepared by mixing the main active material of Preparation Example 6 and the third particles of Preparation Example 4 in a weight ratio of about 70:30.

**Manufacture of Positive Electrode**

95 wt% of a final positive electrode active material, 3 wt% of a polyvinylidene fluoride binder and 2 wt% of a carbon black conductive material were mixed in an N-methylpyrrolidone solvent to prepare a positive electrode active material slurry. The positive electrode active material slurry was applied on an aluminium current collector, dried, and rolled to manufacture a positive electrode.

## Manufacture of Negative Electrode

95 wt% of graphite, 3 wt% of a binder and 2 wt% of a conductive material were mixed in an N-methylpyrrolidone solvent to prepare a negative electrode active material slurry. The negative electrode active material slurry was applied on a copper current collector, dried and rolled to manufacture a negative electrode.

## Fabrication of Rechargeable Lithium Battery

A coin half-cell was formed using the prepared positive electrode and the negative electrode. A polypropylene film (Celgard™ 3510) was used as a separator. As an electrolyte, an electrolyte solution obtained by mixing 1.3 M $LiPF_6$ with a mixture solvent of ethylene carbonate (EC), diethyl carbonate (DEC), and fluoroethylene carbonate (FEC) in a 2:6:2 volume ratio was used.

## Evaluation Example 1: Analysis of the Surface of Positive Electrode Active Material

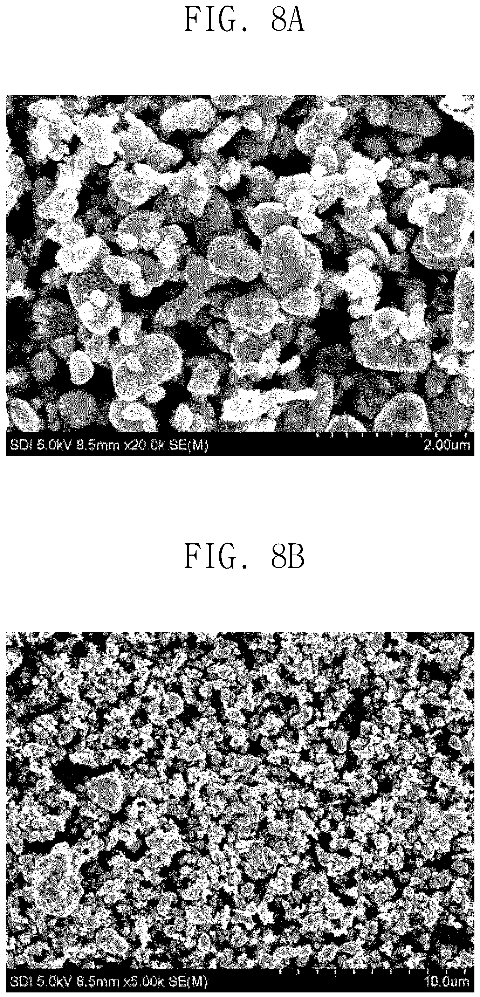

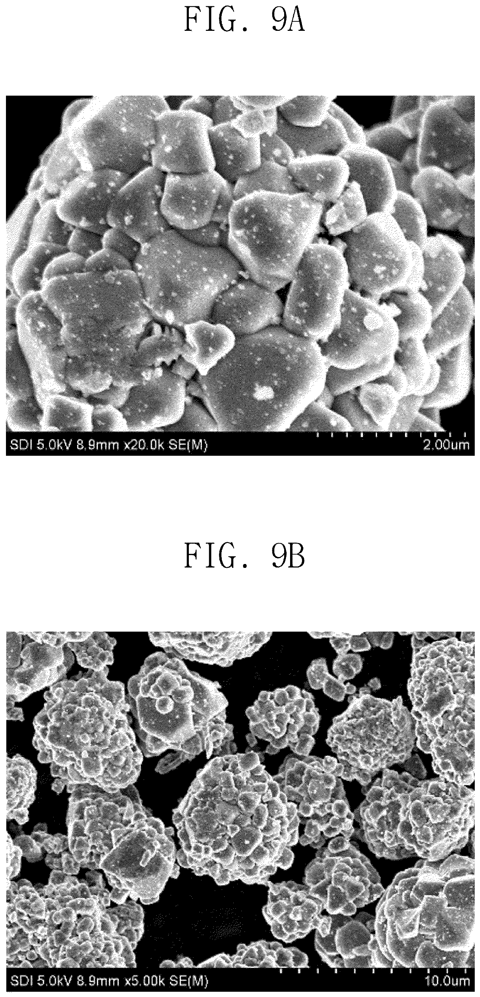

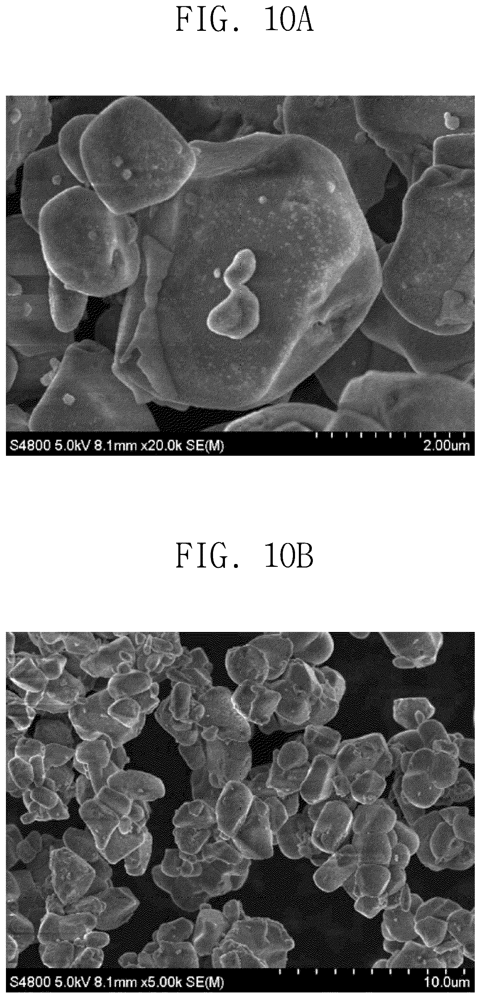

Scanning electron microscope (SEM) images of the first particles prepared in Preparation Examples 1 and 2 are shown in FIGS. 8A to 8D. SEM images of the second particles prepared in Preparation Example 3 is shown in FIGS. 9A and 9B. SEM images of the third particles prepared in Preparation Example 4 is shown in FIGS. 10A and 10B.

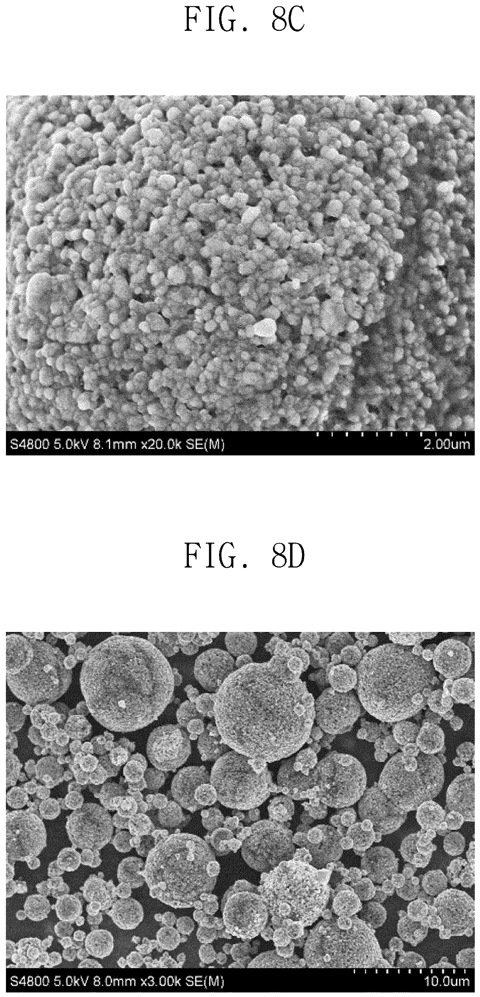

Referring to FIGS. 8A and 8B, it can be seen that the first particles according to Preparation Example 1 of the present disclosure have a fine single particle form with a nano-size. Referring to FIGS. 8C and 8D, it can be seen that the first particles according to Preparation Example 2 of the present disclosure have a spherical secondary particle form in which primary particles are agglomerated. It also can be seen that the primary particles of Preparation Example 2 have a small particle size and are uniform compared to the primary particles of Preparation Example 1.

Referring to FIGS. 9A and 9B, it can be seen that the second particles have a secondary particle form in which primary particles are agglomerated. Referring to FIGS. 10A and 10B, it can be seen that the third particles are single crystals or have a form in which a plurality of single particles are attached to each other.

## Evaluation Example 2: Evaluation of Active Material

The average pellet density (PD) of the positive electrode active materials of Examples 1 to 6 and Comparative Examples 1 to 6 are shown in Table 1. The average pellet density was measured by putting 3 grams of a positive electrode active material in a pellet mold and applying a force of about 4.0 U.S. tons for about 30 seconds.

Table 1

| | Mixing ratio (weight ratio) | | | Powder |
|---|---|---|---|---|
| | First particles | Second particles | Third particles | PD (g/cc) |
| Example 1 | 41.4% | 48.6% | 10% | 2.65 |
| Example 2 | 39.1% | 45.9% | 15% | 2.68 |
| Example 3 | 36.8% | 43.2% | 20% | 2.71 |
| Example 4 | 49.5% | 40.5% | 10% | 2.66 |
| Example 5 | 46.75% | 38.25% | 15% | 2.69 |
| Example 6 | 44% | 36% | 20% | 2.72 |
| Comparative Example 1 | 43.7% | 51.3% | 5% | 2.62 |
| Comparative Example 2 | 34.5% | 40.5% | 25% | 2.72 |
| Comparative Example 3 | 32.2% | 37.8% | 30% | 2.73 |
| Comparative Example 4 | 52.25% | 42.75% | 5% | 2.63 |
| Comparative Example 5 | 41.25% | 33.75% | 25% | 2.70 |
| Comparative Example 6 | 38.5% | 31.5% | 30% | 2.70 |

Referring to Table 1, it can be seen that the positive electrode active materials according to Examples 1 to 6 have similar average pellet density compared to the positive electrode active materials of Comparative Examples 1 to 6.

**Evaluation Example 3: Evaluation of Battery Properties**

The properties of the rechargeable lithium batteries fabricated using the positive electrode active materials of Examples 1 to 6 and Comparative Examples 1 to 6 were evaluated.

Rechargeable lithium batteries were initially charged under constant current (about 0.2 C) and constant voltage (about 4.25 V) conditions, and after resting for about 10 minutes, discharged under constant current (about 0.2 C) conditions until about 2.5 V to carry out initial charging and discharging. Then, charging and discharging were repeated 50 times with about 0.2 C/0.2 C. The evaluation results of the battery properties are shown in Table 2 below.

Table 2

| | 4.25 V Charge amount (mAh/g) | 4.25 V Discharge amount (mAh/g) | 4.25 V Efficiency (%) | Average voltage (V) | 4.25 V Lifetime (%, 50cyc) | Energy density (Wh/kg) |
|---|---|---|---|---|---|---|
| Example 1 | 144.8 | 140.5 | 97.1 | 3.61 | 97.5 | 478 |
| Example 2 | 150.3 | 145.5 | 96.8 | 3.61 | 97.8 | 496 |
| Example 3 | 155.8 | 150.4 | 96.5 | 3.61 | 98.2 | 515 |
| Example 4 | 149.7 | 145.3 | 97.1 | 3.55 | 97.6 | 486 |
| Example 5 | 154.9 | 149.9 | 96.8 | 3.55 | 97.9 | 503 |
| Example 6 | 160.2 | 154.6 | 96.5 | 3.56 | 98.4 | 522 |
| Comparative Example 1 | 142.5 | 138.7 | 97.3 | 3.6 | 97.2 | 469 |
| Comparative Example 2 | 159.2 | 153.2 | 96.2 | 3.61 | 97.9 | 526 |
| Comparative Example 3 | 162.4 | 155.9 | 96.0 | 3.62 | 97.5 | 538 |
| Comparative Example 4 | 146.5 | 142.3 | 97.1 | 3.54 | 97.3 | 475 |
| Comparative Example 5 | 163.2 | 156.7 | 96.0 | 3.56 | 98.2 | 532 |
| Comparative Example 6 | 166.2 | 159.2 | 95.8 | 3.57 | 97.9 | 543 |

Referring to Table 2, it can be seen that the positive electrode active materials according to Examples 1 to 6 have similar efficiency, average voltage, and energy density compared to the positive electrode active materials according to Comparative Examples 1 to 6. In addition, it can be seen that the positive electrode active materials according to Examples 1 to 6 have similar or better lifetime characteristics compared to the positive electrode active materials according to Comparative Examples 1 to 6. Particularly, it can be seen that the positive electrode active materials according to Examples 1 to 3 exhibit high lifetime characteristics of about 98% or more after 50 cycles.

In a positive electrode active material according to the present disclosure, olivine-based first particles and spinel-based second particles constitute a main active material, and by mixing layered third particles with the main active material, capacity and energy density may be improved. The positive electrode active material according to the present disclosure may be inexpensive and may have a high operating voltage and energy density.

Although the embodiments of the present disclosure have been described, it is understood that the present disclosure is not be limited to these embodiments, but rather various changes and modifications can be made by one ordinary skilled in the art within the scope of the present disclosure.

Certain embodiments are set out in the following clauses:

Clause 1. A positive electrode for a rechargeable lithium battery, the positive electrode comprising: a positive electrode current collector; and a positive electrode active material layer on the positive electrode current collector, wherein the positive electrode active material layer comprises the positive electrode active material according to claim 1, a conductive material, and a binder.

Clause 2. The positive electrode for a rechargeable lithium battery of Clause 1, wherein an amount of the binder is about 0.5 parts by weight to about 5 parts by weight based on 100 parts by weight of the positive electrode active material.

Clause 3. The positive electrode for a rechargeable lithium battery of Clause 1 or Clause 2, wherein an amount of the conductive material is about 0.5 parts by weight to about 5 parts by weight based on 100 parts by weight of the positive electrode active material.

Clause 4. The positive electrode for a rechargeable lithium battery of any preceding Clause, wherein the conductive material comprises a carbon-based material comprising natural graphite, artificial graphite, carbon black, acetylene black, Ketjen black, carbon fiber, carbon nano-fiber, and carbon nano-tube; a metal-based material comprising copper, nickel, aluminium, or silver and having a metal powder or metal fiber form; a conductive polymer comprising a polyphenylene derivative; or a mixture thereof.

Clause 5. A rechargeable lithium battery, comprising: the positive electrode according to Clause 1; a negative electrode comprising a negative electrode current collector and a negative electrode active material layer on the negative electrode current collector; and a separator between the positive electrode and the negative electrode.

Clause 6. The rechargeable lithium battery of Clause 5, wherein energy density of the rechargeable lithium battery is about 450 Wh/kg to about 550 Wh/kg.

## Claims

1. A positive electrode active material comprising:

   first particles comprising a compound of Chemical Formula 1 and having an olivine structure;
   second particles comprising a compound of Chemical Formula 2 and having a spinel structure; and
   third particles comprising a compound of Chemical Formula 3 and having a layered structure,
   wherein the first particles and the second particles constitute a main active material,
   wherein an amount of the main active material is about 80 parts by weight to about 90 parts by weight based on 100 parts by weight of the positive electrode active material, and
   wherein an amount of the third particles is about 10 parts by weight to about 20 parts by weight based on 100 parts by weight of the positive electrode active material:

   wherein Chemical Formula 1 is:

   $$Li_{a1}Fe_{x1}B_{y1}PO_{4-b1}$$

   with $0.8 \leq a1 \leq 1.2$, $0.1 \leq x1 \leq 1.0$, $0.001 \leq y1 \leq 0.05$, $0 \leq b1 \leq 0.05$, $x1 + y1 = 1$, and B is at least one of Ti, Mg, V and Nb,
   wherein Chemical Formula 2 is:

   $$Li_{a2}Mn_{x2}Mg_{y2}O_{4-b2}$$

   with $0.8 \leq a2 \leq 1.2$, $1.9 \leq x2 \leq 2.05$, $0 \leq y2 \leq 0.05$ (e.g., $0.001 \leq y2 \leq 0.05$), and $0 \leq b2 \leq 0.05$,
   wherein Chemical Formula 3 is:

   $$Li_{a3}Ni_{x3}Co_{y3}E_{z3}O_{2-b3}$$

   with $0.8 \leq a2 \leq 1.2$, $0.9 \leq x3 \leq 1.0$, $0 \leq y3 \leq 0.1$, $0 \leq z3 \leq 0.1$, $0 \leq b3 \leq 0.05$, $x3 + y3 + z3 = 1$, and E is Al, Mn or a combination of Al and Mn.

2. The positive electrode active material of claim 1, wherein an amount of Mn in the main active material is about 40 mol% to about 70 mol%.

3. The positive electrode active material of claim 1, wherein a ratio of the first particles and the second particles is about 4:6 to about 6:4 based on a weight.

4. The positive electrode active material of claim 1, wherein the first particles comprise first primary particles, and the second particles have a secondary particle form in which a plurality of second primary particles are agglomerated.

5. The positive electrode active material of claim 4, wherein an average diameter of the first primary particles is smaller than an average diameter of the second primary particles.

6. The positive electrode active material of claim 4, wherein the first particle has a single particle form, a first average diameter of the first particles is about 0.5 $\mu$m to about 2.5 $\mu$m, and an average diameter of the first primary particles is about 200 nm to about 300 nm.

7. The positive electrode active material of claim 4, wherein the first primary particles are agglomerated with each other, an average diameter of the first particles is about 3 μm to about 10 μm, and an average diameter of the first primary particles is about 100 nm to about 200 nm.

8. The positive electrode active material of claim 4, wherein an average diameter of the second primary particles is about 0.5 μm to about 3 μm.

9. The positive electrode active material of claim 1, wherein the first particles comprise coating layers containing carbon, and an amount of carbon in the first particle is about 1.5 wt% to about 2.5 wt%.

10. The positive electrode active material of claim 1, wherein the third particle have a single particle form.

11. The positive electrode active material of claim 1, wherein the third particles have a form in which a plurality of single particles are attached to each other, and an particle diameter of the first particles is less than an average diameter of the plurality of single particles.

12. The positive electrode active material of claim 1, wherein an average diameter of the third particles is about 2 μm to about 5 μm.

13. The positive electrode active material of claim 1, wherein a pellet density of the positive electrode active material is about 2.6 g/cc to about 2.8 g/cc.

14. A positive electrode for a rechargeable lithium battery, the positive electrode comprising:

  a positive electrode current collector; and
  a positive electrode active material layer on the positive electrode current collector,
  wherein the positive electrode active material layer comprises the positive electrode active material according to claim 1, a conductive material, and a binder.

15. The positive electrode for a rechargeable lithium battery of claim 14, wherein the binder comprises at least one of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon.

# FIG. 1

# FIG. 2

FIG. 3

# FIG. 4

# FIG. 5

# FIG. 6

# FIG. 7

# FIG. 8A

SDI 5.0kV 8.5mm x20.0k SE(M)     2.00um

# FIG. 8B

SDI 5.0kV 8.5mm x5.00k SE(M)     10.0um

# FIG. 8C

S4800 5.0kV 8.1mm x20.0k SE(M)　　2.00um

# FIG. 8D

S4800 5.0kV 8.0mm x3.00k SE(M)　　10.0um

## FIG. 9A

SDI 5.0kV 8.9mm x20.0k SE(M)　　2.00um

## FIG. 9B

SDI 5.0kV 8.9mm x5.00k SE(M)　　10.0um

# FIG. 10A

S4800 5.0kV 8.1mm x20.0k SE(M)        2.00um

# FIG. 10B

S4800 5.0kV 8.1mm x5.00k SE(M)        10.0um

**EUROPEAN SEARCH REPORT**

Application Number

EP 25 16 9157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/006076 A1 (KAWAMURA HIROAKI [JP]) 6 January 2022 (2022-01-06)<br>* paragraph [0003] - paragraph [0005] *<br>* table 1 *<br>* paragraph [0035] *<br>* paragraph [0040] *<br>* paragraph [0059] *<br>* paragraph [0075] *<br>* paragraph [0039] *<br>* paragraph [0060] - paragraph [0061] *<br>* example 7 *<br>----- | 1-15 | INV.<br>H01M4/36<br>H01M4/505<br>H01M4/525<br>H01M4/58<br>H01M4/136<br>H01M4/131<br>C01B25/00<br>C01G49/00<br>H01M4/02<br><br>ADD.<br>C01B25/30<br>H01M4/62 |
| Y | HWANG DO-YOUNG ET AL: "Single-crystalline Ni-rich LiNi0.91Co0.06Mn0.03O2 cathode enables durable interfacial stability for high electrochemical performances", INTERNATIONAL JOURNAL OF ENERGY RESEARCH, vol. 46, no. 2, 20 September 2021 (2021-09-20), pages 2064-2072, XP093244292, GB ISSN: 0363-907X, DOI: 10.1002/er.7286<br>* abstract *<br>* figures 2B, 2C *<br>* page 2067, line 18 - line 19 *<br>----- | 1-15 | |
| Y | NI LIANSHAN ET AL: "Crack-free single-crystalline Co-free Ni-rich LiNi0.95Mn0.05O2 layered cathode", ESCIENCE, vol. 2, no. 1, 2 March 2022 (2022-03-02), pages 116-124, XP093282400, ISSN: 2667-1417, DOI: 10.1016/j.esci.2022.02.006<br>* figures 1b, 1d *<br>* abstract *<br>* page 119, line 11 - line 13 *<br>----- | 1-15 | TECHNICAL FIELDS SEARCHED (IPC)<br><br>H01M<br>C01G |

-/--

The present search report has been drawn up for all claims

| Place of search | Date of completion of the search | Examiner |
|---|---|---|
| The Hague | 19 June 2025 | Al-Kutubi, Hanan |

EPO FORM 1503 03.82 (P04C01)

Europäisches
Patentamt

European
Patent Office

Office européen
des brevets

**EUROPEAN SEARCH REPORT**

Application Number

EP 25 16 9157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KR 2023 0162124 A (NINGDE AMPEREX TECHNOLOGY LTD [CN]) 28 November 2023 (2023-11-28) * the whole document * ----- | 1-15 | |
| A | WO 2024/080634 A1 (LG ENERGY SOLUTION LTD [KR]) 18 April 2024 (2024-04-18) * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 19 June 2025 | Al-Kutubi, Hanan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 25 16 9157

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2025

| Patent document cited in search report | Publication date | Patent family member(s) | | Publication date |
|---|---|---|---|---|
| US 2022006076 A1 | 06-01-2022 | CN | 113039669 A | 25-06-2021 |
| | | EP | 3893296 A1 | 13-10-2021 |
| | | JP | 7259766 B2 | 18-04-2023 |
| | | JP | WO2020116160 A1 | 14-10-2021 |
| | | KR | 20210076147 A | 23-06-2021 |
| | | US | 2022006076 A1 | 06-01-2022 |
| | | WO | 2020116160 A1 | 11-06-2020 |
| KR 20230162124 A | 28-11-2023 | CN | 113812021 A | 17-12-2021 |
| | | CN | 119208560 A | 27-12-2024 |
| | | EP | 4386920 A1 | 19-06-2024 |
| | | JP | 2024522673 A | 21-06-2024 |
| | | KR | 20230162124 A | 28-11-2023 |
| | | US | 2024274792 A1 | 15-08-2024 |
| | | WO | 2023015489 A1 | 16-02-2023 |
| WO 2024080634 A1 | 18-04-2024 | CN | 119365998 A | 24-01-2025 |
| | | EP | 4528849 A1 | 26-03-2025 |
| | | KR | 20250006786 A | 13-01-2025 |
| | | US | 2025149623 A1 | 08-05-2025 |
| | | WO | 2024080634 A1 | 18-04-2024 |

EPO FORM P0459

For more details about this annex : see Official Journal of the European Patent Office, No. 12/82